# EUROPEAN PATENT APPLICATION

(11) **EP 2 746 463 A1**
(43) Date of publication of application: **25.06.2014**
(21) Application number: 13197215.0
(22) Date of filing: 13.12.2013
(51) Int. Cl.: E02F 3/18, B65G 15/14, E02F 3/92, E02F 7/02

(54) **Apparatus, dredging device and method for transporting material taken up in a liquid**

(30) Priority: 18.12.2012 BE 201200848
(71) Applicant: Baggerwerken Decloedt en Zoon, 8400 Oostende (BE)
(72) Inventor: Durt, Dominique Maria Colette Hubert, B2640 Mortsel (BE); De Boom, Marc, B9450 Haaltert (BE)
(74) Representative: Brouwer, Hendrik Rogier

(57) **Abstract**

The invention relates to an apparatus for transporting material taken up in a liquid from an inlet side (131) to a higher outlet side (130), a dredging device (1) and corresponding method for transporting a material present in a liquid from an inlet side (131) to a higher outlet side (130). The apparatus comprises a support construction running between the inlet side (131) and the outlet side (130) for the purpose of supporting a discharge means for material present on the inlet side, wherein the discharge means comprises two carrying walls (13a, 13b)which are movable in the direction of the outlet side by means of a mechanical drive (12a, 12b) and between which the material for discharge is received. The invention likewise relates to a dredging device (1) for dredging bottom material underwater while making use of the apparatus, and a corresponding method. The invention allows discharge of material taken up in a liquid wherein sediment contamination is reduced.

## Description

The invention relates to an apparatus for transporting material taken up in a liquid from an inlet side to a higher outlet side. The invention likewise relates to a dredging device for dredging bottom material underwater and a corresponding method which makes use of the invented apparatus.

Transport of a material present in a liquid from an inlet side to a higher outlet side occurs frequently and must be able to take place as efficiently as possible. Owing to the height difference between inlet and outlet side it is not easy to prevent considerable loss of (among other parts, the finer fraction of the) material during the transport. Loss of such material is economically undesirable but can also result in undesirable contamination of the surrounding area, for instance when the material for transporting is contaminated with heavy metals or other impurities. This is a particularly great drawback during dredging operations. Dredging operations are a usual part of hydraulic engineering operations, such as for instance in port development, tunnel construction, urban expansion, beach replenishment, coast protection, installation of power stations such as wind turbines, mining, environmental improvement and the like.

It is of course important during dredging to operate efficiently and to remove as much bottom material as possible per unit of time using the least possible power. More and more emphasis has however been placed in recent years on the effect of dredging on the surrounding environment, particularly the flora and fauna of nature reserves located in the vicinity of the dredging operations. A significant problem is formed here by sediment spill. During the excavation, dredging, transport and/or dumping of excavated bottom material a part will remain behind in the water as relatively fine sediment. Such sediment clouds can make the water highly turbid, and this increased turbidity disrupts the natural environment. Although during hydraulic transport of for instance bottom material comprising clay the transport will take place in closed pipes, the material is mixed with the transport water such that the material can only be separated with very great effort from the water during dumping.

The present invention has for its object to provide an apparatus for transporting a material present in a liquid from an inlet side to a higher outlet side, wherein the above stated drawbacks do not occur or do so to lesser extent. It is a particular object to provide an apparatus which can be advantageously applied in the dredging of bottom material underwater.

The invention provides for this purpose an apparatus as according to claim 1. The apparatus is configured to transport material taken up in a liquid from an inlet side to a higher outlet side, and comprises a support construction running between the inlet side and the outlet side for the purpose of supporting a discharge means for material present on the inlet side, wherein the discharge means comprises two carrying walls which are movable in the direction of the outlet side by means of a mechanical drive and between which the material for discharge is received.

In a preferred embodiment an entraining means for the material is situated between the carrying walls.

With the invented apparatus a material taken up in a liquid can be transported upward from a low position and vice versa in efficient manner with negligible loss of material. Transport at the same time takes place mechanically, whereby the material does not have to be brought into a liquid suspension, as is necessary for hydraulic transport.

Loss of material during transport is further prevented in an embodiment of the apparatus in which at least one of the carrying walls runs between the inlet side and the outlet side. The at least one carrying wall then extends over substantially the whole length of the discharge means since this discharge means will generally extend according to the invention between the inlet side and the outlet side.

In another embodiment the apparatus is characterized in that the entraining means is mounted on the support construction for movement in the direction of the outlet side and is driven by means of a mechanical drive. It is advantageous for the speed of movement of the entraining means to be adapted here to the speed of movement of the carrying walls, wherein substantially the same speed is recommended. Such an embodiment limits wear.

According to the invention the support construction runs between an inlet side where the material for transporting is located and an outlet side where the transported material is stored and/or transported further. The support construction can be connected in any manner to a bearing structure comprising for instance a receptacle for the transported material. In a dredging device further elucidated below the support construction is for instance mounted on a bearing structure in the form of a dredging vessel. Although the mounting of the support construction on the structure can be rigid, it is recommended to provide an apparatus in which the support construction is connected to the structure for pivoting around a preferably horizontal axis. This allows placing of the support construction at different angles to the vertical direction, including an angle of substantially zero degrees, without much material being lost during transport. The advantages of the invention thus become particularly manifest in an embodiment provided with a pivoting support construction. The connection of the support construction to the bearing structure is preferably situated at the position of the outlet side. In an embodiment of the dredging device further elucidated below the pivoting support construction runs at least partially underwater.

The mechanical driving of the carrying walls of the discharge means and/or of the entraining means can comprise any drive suitable for the purpose. A suitable embodiment of the apparatus according to the invention comprises a mechanical drive in the form of rollers mounted on the support construction, wherein at least one roller is drivable and wherein the carrying walls and/or the entraining means are movable together with the rollers.

The carrying walls of the discharge means can also be selected within broad limits, as long as the discharge of the material taken up in the liquid does not take place hydraulically with substantial mixing with water. A suitable embodiment of the apparatus comprises in this respect carrying walls in the form of an endless conveyor belt. Such a carrying wall allows a substantially continuous discharge of the material. It can be advantageous here, particularly in order to also allow slightly steeper transport, for the conveyor belt to be provided on a carrying surface with retaining means for the material, such as for instance V-shaped ribs.

In another embodiment the carrying walls comprise for this purpose at least two conveyor belts co-rotating over each other in opposite rotation directions. In such an assembly of two or more mutually stacked conveyor belts, the conveyor belts run substantially parallel to each other. By having a second conveyor belt co-rotate (in anticlockwise direction) on top of the carrying conveyor belt the material taken up in the liquid is caught to a certain extent between the two conveyor belts and discharged upward with greater efficiency.

In a further embodiment an entraining means runs between the carrying walls. The entraining means is configured to entrain material present between the carrying walls. In a suitable embodiment the entraining means comprises a series of partitions mutually connected by means of cables or chains, preferably a rope ladder. In an embodiment of the entraining means the partitions run substantially transversely of the direction of movement of the carrying walls. In order to prevent loss of material as far as possible the shape of the partitions fits as closely as possible onto at least one of the carrying walls, and preferably onto both. There are further advantages here when the carrying walls come closer together at the side edges in the direction running transversely of the direction of movement, or even come into contact at their side edges. Loss of material via the side edges is thus reduced. In such an embodiment the partitions preferably also have a shape with a height decreasing toward the side edges.

An embodiment provided with the entraining means ensures that little or substantially no material can leave the discharge means, and particularly the space enclosed by the carrying walls.

In an embodiment the entraining means in the invented apparatus comprises an endless rope ladder. Such a rope ladder comprises in an embodiment one central and/or two or more endless chains or cables which are placed a transverse distance from each other an on which transverse partitions are arranged. The shape of the transverse partitions is preferably such that the transverse partitions fit as closely as possible to the carrying walls. A suitable mechanical drive comprises two or more wheels over which the endless chains or cables run, wherein at least one wheel is preferably drivable. The mutual distance between the transverse partitions in the direction of movement can be chosen subject to the properties of the material.

In another embodiment of the invention an apparatus is provided wherein the discharge means is provided with a scraper device at least on an outlet side. Stickier ground such as clay can hereby also be collected, and possibly adhered bottom material is removed from discharge means and/or entraining means.

The invention likewise relates to a dredging device which is configured to dredge bottom material underwater and which comprises a vessel which can be anchored in an underwater bottom and which has a ladder which can be positioned obliquely downward in the body of water from the vessel and is provided at the free outer end thereof with at least one rotating cutting tool, wherein the dredging device is provided with a transport apparatus according to the invention.

A known device for dredging an underwater bottom is described in NL-1031253. The known cutter head is a revolving body which is rotatable around a central axis and formed by a base ring and a hub placed at a distance therefrom and concentrically thereto, between which extend a number of arms provided with cutting tools such as teeth. Situated between the arms are passage openings along which the dredged ground can be discharged. The cutter head is applied in combination with a cutter suction dredger (also referred to as cutter dredger). A cutter suction dredger comprises a vessel anchored in the bottom by means of spud posts. The anchoring absorbs the reaction forces occurring during dredging and transmits them to the bottom. Attached to the ladder of the cutter suction dredger is a suction conduit which is connected to the cutter head and along which the dredged ground, mixed with water, is removed. During dredging the cutter head is set into rotation and lowered into the water with ladder and suction conduit at a generally oblique angle until it touches the bottom. The cutter head is subsequently dragged through the bottom in rotating state by alternately hauling the ladder from port side to starboard side using winches, wherein the cutter head makes a lateral sweeping movement. A whole bottom surface can be dredged by moving the cutter suction dredger over a determined distance at a time and repeating the above stated sweeping movement. The suction conduit is connected to a pump which then pumps the dredged mixture through a pressure conduit to a container moored alongside the vessel or directly to a dumping zone.

The hydraulic transport of the known cutter suction dredger has the drawback that, depending on the bottom, a relatively large amount of fine clay and sludge particles is brought into an aqueous suspension, from which these particles can be removed only with great difficulty and/or time. This may result in a relatively high degree of sediment contamination during loading of containers or during pumping into the dumping zone. This technique cannot therefore always be utilized in the vicinity of nature reserves.

The present embodiment of the invention provides a dredging device which does not have the above stated drawbacks, or at least does to lesser extent.

In an embodiment of the dredging device the support construction is arranged such that the inlet side is situated at the position of the rotating cutting tool and the outlet side debouches at the position of the deck of the vessel.

A suitable embodiment of the dredging device according to the invention has the feature that the rotating cutting tool comprises a passage for excavated bottom material, to which passage connects the inlet side of the discharge means for the excavated bottom material. Bottom material dredged up by the cutting tool can in this way be supplied directly to the inlet side of the discharge means, thereby preventing loss of bottom material.

The rotating cutting tool can in principle comprise any cutting tool able to excavate bottom material. In an embodiment the at least one rotating cutting tool can comprise a revolving body rotatable around a central axis which is formed by a base ring and a hub placed at a distance therefrom and concentrically thereto, between which extend a number of support arms provided with cutting tools, for instance in the form of bits.

In another, more advantageous embodiment the rotating cutting tool comprises a cutting wheel, wherein the cutting wheel comprises a wheel which is driven rotatably about a horizontal axis and provided with a series of cutting scoops arranged distributed on the outer periphery with an inlet opening directed forward in the rotation direction, and wherein the outer periphery of the wheel comprises the passage for the excavated bottom material, to which passage connects the inlet side of the discharge means for the excavated bottom material.

By combining the rotating cutting tool with the discharge means for the excavated bottom material preferably provided with the entraining means a lesser sediment contamination is achieved than is the case with the known cutter suction dredger. In addition, it is hereby possible to work with a higher efficiency than with other mechanical cutting gear, such as dredging cranes or bucket dredgers, particularly at greater depths and in harder bottoms. The invented apparatus is therefore advantageously applied in a method for dredging bottom material underwater, which comprises the steps of providing an embodiment of the invented dredging device; lowering the support construction obliquely downward into the water so that the inlet side is situated at the position of the rotating cutting tool and the outlet side debouches at the position of the deck of the vessel; loosening the bottom material by rotating the cutting tool; discharging dredged bottom material via the passage of the cutting tool to the carrying walls of the discharge means; and transporting the dredged bottom material by means of driving the carrying walls, wherein the entraining means ensures that a substantial part of the bottom material is entrained with the carrying walls.

In the context of this application a substantial part of a quantity is understood to mean a part amounting to at least 80%, more preferably at least 85% and most preferably at least 90% of the quantity.

The higher efficiency of the invented dredging device relative to the known dredging cranes, particularly at greater depths, is a result of the fact that the present invention allows a substantially continuous cutting process. When dredging cranes are used, the cutting process forms only part of the dredging cycle. This is because a relatively large part of the cycle is spent displacing (hoisting, sweeping, paying out) and dumping of the dredged ground and cutting tool. The deeper the excavation required, the smaller the proportion of the cutting process in the dredging cycle becomes, and the less efficient the dredging cycle thus becomes. Compared to dredging cranes a much better dredging tolerance can moreover be obtained with the present invention, this being very important for instance when dredging tunnel trenches. The improved dredging tolerance moreover further increases efficiency in that excavation of too much ground is avoided. A second carrying wall and the entraining means have a positive effect here on efficiency.

According to the invention the drive for the cutting process and the drive for the (mainly vertical) transport of the dredged bottom are not linked. The available cutting capacity of a bucket dredger is relatively limited because the forces for the cutting process have to be transmitted by the drive wheel of the bucket chain, by the bucket chain itself and by each of the buckets in turn. The use of greater cutting capacities would require each of these components having to be made heavier, which would result in an excessively heavy and expensive construction. A further advantage of the invented dredging device is that the speeds of the rotating cutting tool (the rotation speed) and those of the discharge means (the discharge speed) can be chosen independently of each other. This further increases the efficiency.

In another embodiment of the invention the dredging device comprises a suction conduit connected to pump means and extending from the vessel and into the vicinity of the inlet side of the discharge means. Such a suction conduit allows bottom material, which may come from the discharge means and has accumulated at the position of the inlet side, to be suctioned up and discharged to the vessel. The suction conduit can moreover create a light underpressure at the position of the inlet side and the rotating cutting tool, whereby an inflow through the cutting tool can result which can further reduce the turbidity in the surrounding area. In order to achieve said effects, the cross-section of the suction conduit and the power and flow rate produced by the pump means can be significantly smaller than the cross-sections and powers of respectively section conduit and pump means usual in a cutter suction dredger, for instance less than 25%.

In a suitable embodiment the dredging device according to the invention comprises one cutting tool rotatable about a horizontal axis, and in particular a cutting wheel comprising one wheel driven rotatably about a horizontal axis and provided on the outer periphery with a series of cutting scoops arranged distributed over the periphery with an inlet opening directed forward in the rotation direction, and wherein the outer periphery of the wheel comprises a passage for excavated bottom material. The rotation axis of the wheel is substantially horizontal, which is understood to mean that this axis runs parallel to the water surface. The rotation axis can lie here in the plane of the ladder to which the cutting wheel is attached, but preferably extends perpendicularly of this plane. The cutting tool can likewise cut in the axial direction of the ladder, although in such an embodiment it is necessary to accommodate (internally in the cutting device) a relatively short mechanical raising means, such as for instance an Archimedes screw part, to carry the dredged material onto the discharge means.

Provided in an embodiment according to the invention is a dredging device comprising two cutting tools, preferably cutting wheels, arranged on either side of the ladder. In some conditions the production width can be increased with such a device, particularly when the cutting tools are moved in a direction over the underwater bottom which varies from the direction in which their (common) rotation axis runs. More cutting tools also provide a better shielding and protection of the discharge means.

A cutting wheel of an embodiment of the invented dredging device comprises a wheel which is rotatable about a horizontal axis and provided with a series of cutting scoops arranged on the outer periphery. The number of cutting scoops can be chosen in accordance with the conditions and are preferably distributed uniformly over the periphery. The cutting scoops can take the form of buckets, wherein cutting scoops which are essentially U-shaped in radial section of the wheel are recommended. The legs of the U-shape connect here onto said outer periphery. Such cutting scoops lack a bottom, which facilitates the discharge of the excavated bottom material. Provided for discharge purposes in the outer periphery, preferably over the whole length between the legs of the scoops, is a passage to which connects a collecting unit which protrudes inwardly into the wheel and which in turn connects to an inlet side of a discharge means, for instance in the form of a number of driven buckets.

The cutting tool, preferably the cutting wheel, can rotate during operation such that the cutting scoops operate upward from the bottom, although an opposite direction is also possible. While the apparatus is in operation the vessel with the ladder on which the cutting tool is situated has to be held in place to enable precise excavation. In the case of relatively small depths the anchoring can take place by lowering spud posts and/or cables. At greater depths (for instance more than -35 below the water surface) the use of cables is recommended. Depending on the rotation direction of the rotating cutting tool, the reaction forces occurring act in downward direction, which tends to pull the vessel deeper into the water, as well as in horizontal direction, which tends to carry the cutting tool out of engagement with the underwater bottom for processing. The horizontal reaction forces can usually be absorbed well by spud posts, although the bending moments on the spud post become very great at greater depths, rendering the use of a spud post no longer economic. It has been found that the apparatus according to the invention can also be stabilized well using cables.

A simple embodiment of the apparatus according to the invention has the feature that the ladder which can be positioned obliquely downward in the body of water from the vessel comprises the discharge means, preferably provided with the entraining means. The ladder and the discharge means then form part of the same construction, which comprises for instance a framework structure in which the carrying walls of the discharge means and preferably also the discharge means are received.

In yet another embodiment of the invention an apparatus is provided wherein the outlet side of the discharge means connects to a second discharge means located on the deck of the vessel. This enables a semi-continuous discharge of excavated bottom material, this discharge being facilitated still further by an embodiment wherein the second discharge means comprises carrying walls driven by means of a mechanical drive.

A further embodiment of the dredging device according to the invention comprises an apparatus wherein the second discharge means extends in the athwartship direction of the vessel and is translatable in the athwartship direction. It is then advantageous for the apparatus to further comprise a removal vessel for the excavated bottom material moored on at least one side of the vessel, wherein an outer end of the second discharge means connects to a bin of the removal vessel.

With the above described embodiment of the invented dredging device it is possible to excavate an underwater bottom in efficient and environmentally-friendly manner, wherein in an embodiment of the method according to the invention the vessel is anchored in the underwater bottom by lowering a spud post of the vessel and the cutting wheel is moved over and in the bottom by hauling the vessel alternately from port side to starboard side using winches, wherein the vessel rotates around the spud post and the cutting wheel makes a lateral sweeping movement.

In an alternative embodiment of the method according to the invention the vessel is anchored in the underwater bottom by allowing anchors connected to the vessel by means of anchor ropes to engage in the bottom, and the cutting wheel is moved over and in the bottom along a path defined by hauling of the vessel with the anchor ropes.

The two methods enable excavation of an underwater bottom without causing much sediment contamination. A further advantage of the apparatus and method according to the invention is that the excavation can be performed to a very precise depth, whereby the excavated underwater bottom has a relatively well-defined and flat surface. This significant advantage avoids the unnecessary supply of expensive hydraulic engineering material. The gravel bed necessary for a tunnel construction foundation will for instance thus require less gravel to be supplied than is the case in the known method.

The invention will now be further elucidated on the basis of an embodiment suitable for dredging bottom material underwater, with reference to the accompanying figures. The invention is however not limited to this specific exemplary embodiment. In the figures:
figure 1 is a schematic side view of an embodiment of the apparatus according to the invention;
figure 2 is a schematic top view of another embodiment of the apparatus according to the invention;
figure 3 is a schematic perspective view of an embodiment of a cutting wheel according to the invention; and finally
figure 4 is a schematic side view of an embodiment of the apparatus according to the invention in more detail.

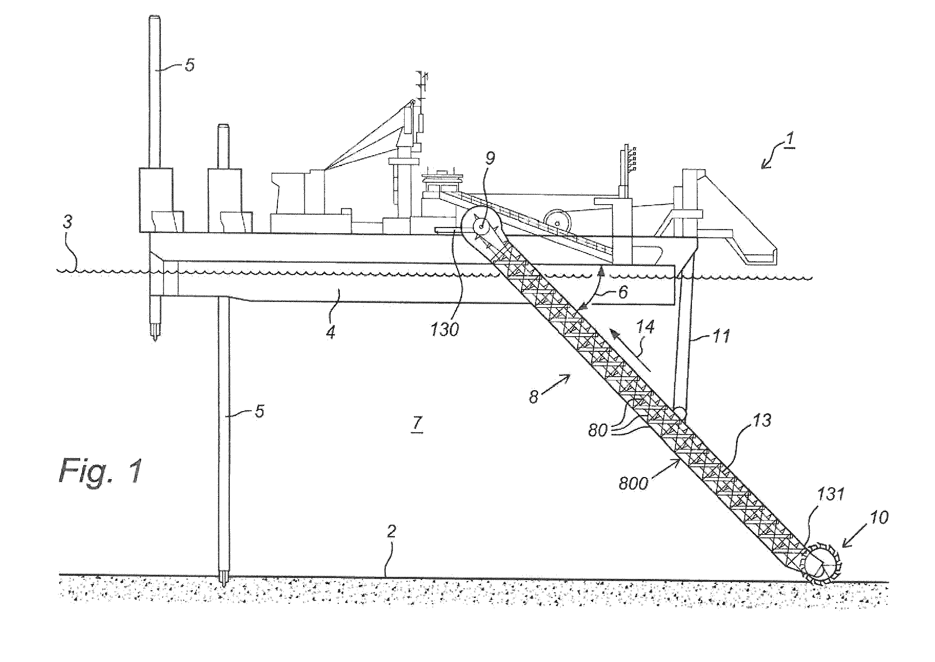

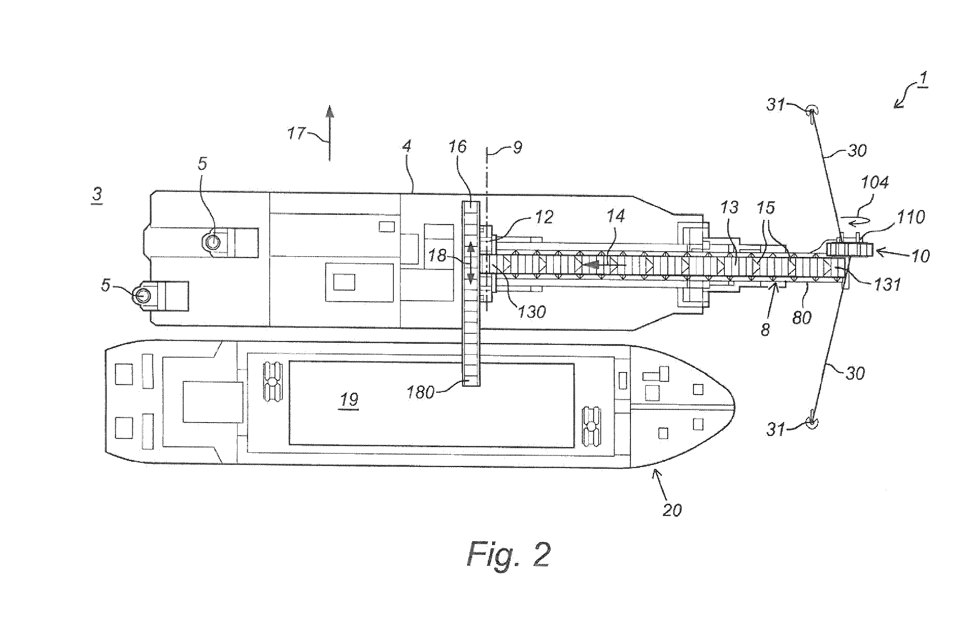

Referring to figures 1 and 2, an apparatus 1 is shown for dredging bottom material 2 under the water surface 3. The shown embodiment comprises a vessel 4 anchored in the underwater bottom 2 by means of spud posts 5 (the rear spud posts 5 function as aid to temporarily anchor the vessel). The vessel is further provided with a ladder 8 positioned in the body of water 7 at an oblique angle 6 from an outlet side 130 to a lower-lying inlet side 131 for the bottom material. The ladder is provided at the free outer end thereof with at least one cutting wheel 10, and further with a support construction with a discharge means and an entraining means, this such that inlet side 131 is situated at the position of cutting wheel 10 and outlet side 130 debouches at the position of the deck of the vessel. In the shown embodiment the support construction comprises a framework construction 800 constructed from mutually connected pull and push rods 80. Ladder 8 is connected at the other end to vessel 4 for rotation around a shaft 9. Ladder 8 can be rotated around the horizontal axis by means of cables 11 which can be hauled in (wherein ladder 8 is raised and angle 6 reduced) or payed out (wherein ladder 8 is lowered and angle 6 increased) using for instance winches present on deck. The support construction is co-rotated with ladder 8 around a horizontal axis.

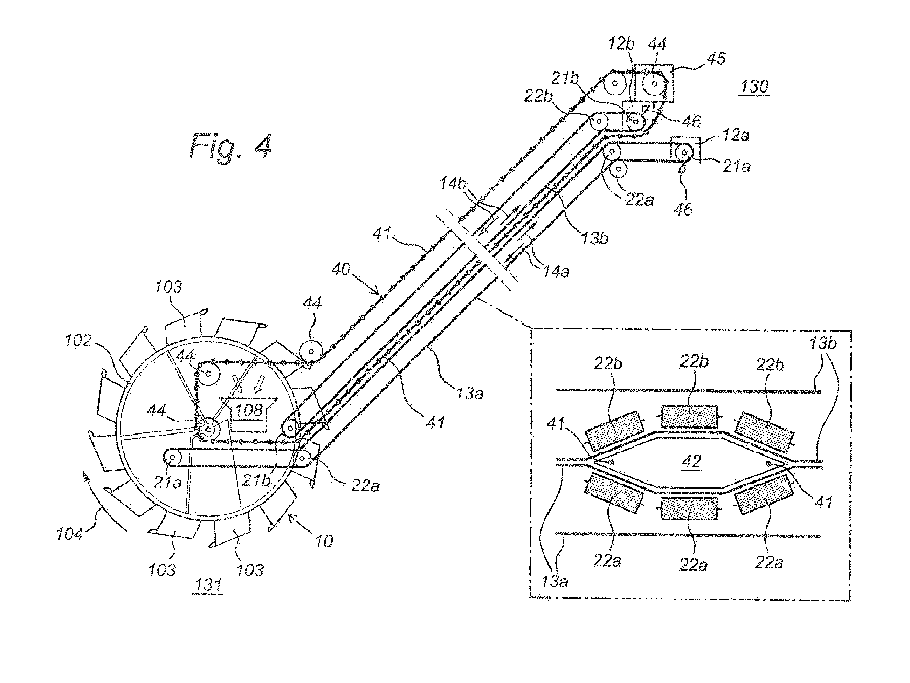

Ladder 8 further comprises a discharge means for the excavated bottom material shown in more detail in figure 4 in the form of a first carrying wall for the bottom material which is driven by means of mechanical drive 12a and takes the form of a first conveyor belt 13a which transports excavated bottom material in the indicated rotation direction 14a from the lower inlet side 131 obliquely upward to the higher outlet side 130. The discharge means further comprises a second carrying wall in the form of a second conveyor belt 13b which is driven by a mechanical drive 12b and which runs over first conveyor belt 13a in a rotation direction 14b opposite to rotation direction 14a. The second conveyor belt 13b provides for a better transport of the bottom material from inlet side 131 to outlet side 130. The endless conveyor belts (13a, 13b) run over wheels (21a, 21b) which are disposed at the position of the inlet and outlet sides and at least one of which is driven by drives (12a, 12b). Conveyor belts (13a, 13b) further run along optional guide rollers (22a, 22b) and support and pressure rollers. Conveyor belts (13a, 13b) are provided if desired on their carrying surface (facing toward the entrained bottom material) with V-shaped ribs 15 which prevent downward sliding of bottom material. In addition, conveyor belts (13a, 13b) are preferably to some extent dish-shaped in the direction running transversely of the direction of movement, as shown in the inset of figure 4, which inset shows this cross-section. From the top downward the inset of figure 4 shows the substantially horizontally running flat return side of the upper conveyor belt 13b, guide and pressure rollers 22b for the upper conveyor belt placed distributed at regular distances, for instance every few metres in the direction of movement, above and/or below the respective conveyor belts, the folded, material-carrying side of the upper conveyor belt 13b (under which lies the material for transporting), an entraining means in the form of transverse partition 42 (see below) with two connecting points for chains 41, an upper side of the lower conveyor belt 13a (on which the material rests), guide rollers 22a for supporting the lower conveyor belt (once again arranged distributed over the length of the belt), and the return side of the lower conveyor belt 13a.

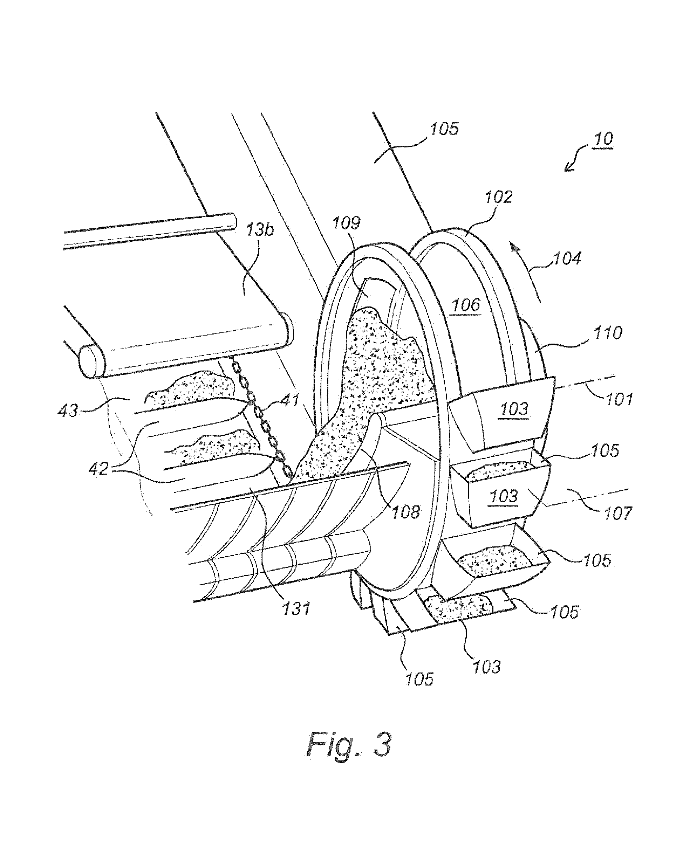

According to an embodiment of the invention the framework construction 800 is further provided with an entraining means in the form of an endless rope ladder 40 running between inlet side 131 and outlet side 130. Rope ladder 40 is mounted for movement in the direction of outlet side 130 on framework construction 800, which for the sake of clarity is not shown in figure 4. Rope ladder 40 comprises one central endless chain or two or more endless chains 41 which are placed a transverse distance from each other and between which transverse partitions 42 are arranged (see figure 3). The spaces 43 enclosed between the two chains 41 and two successive transverse partitions 42 form passage openings for water and bottom material parts small enough to slip through passage openings 43. The endless chains 41 of rope ladder 40 run over wheels 44 which are disposed at the position of the inlet and outlet sides and at least one of which is driven by a suitable mechanical drive 45. The height of transverse partitions 42 is such that transverse partitions 42 fit closely onto the carrying surfaces of the endless conveyor belts (13a, 13b) facing toward the bottom material. It will be apparent that passage openings 43 can also be formed in a manner other than that outlined here, for instance by bridging the transverse partitions 42 with partitions (not shown) running in longitudinal direction of endless chains 44. Rope ladder 40 can if desired be disposed in stationary manner, or optionally be moved in a direction opposite to the transport direction. The entraining means in the form of rope ladder 40 will generally co-displace with conveyor belt 13a. If desired, conveyor belts (13a, 13b) and rope ladder 40 are provided on at least outlet side 130 with a scraping or spray cleaning device, indicated in the drawing in the form of scraper knives 46. According to the invention, the conveyor belts can be provided on both side edges with upright edges and/or can comprise upright transverse partitions. Such conveyor belts have the drawback that they cannot be scraped clean and can thus become clogged with clay.

In the embodiment shown in figure 2 the outlet side 130 of conveyor belt 13 optionally connects via a funnel (not shown) to a second discharge means in the form of conveyor belt 16. This is situated on the deck of vessel 4 and extends in athwartship direction 17 of vessel 4. Conveyor belt 16 is preferably translatable in athwartship direction 17 to both starboard side and port side, as indicated schematically with double arrow 18. The translation of conveyor belt 16 allows an outer end 180 of conveyor belt 16 to be connected to bin 19 of a removal vessel 20 which is moored to one side of vessel 4 and can receive the excavated bottom material. Relatively dry bottom material excavated by the apparatus according to the invention can be carried to a reclamation area in simple manner by removal vessel 20. Because the bottom material is relatively dry, dumping thereof in the reclamation area will entail relatively little sediment contamination. It is thus possible for instance to moor removal vessels 20 at a quay and there empty them using cranes.

Referring to figure 3, a cutting wheel 10 according to the invention will now be described in more detail. The shown cutting wheel 10 is connected by means of a bearing structure 105 to the lower end of ladder 8 and comprises a wheel 102 driven rotatably about a horizontal axis 101 and provided on the outer periphery thereof with a series of cutting scoops 103 arranged distributed over the periphery with an inlet opening 105 directed forward (upward) in rotation direction 104. Cutting scoops 103 have a U-shape in radial section (along plane 107) of wheel 102, wherein the legs of the U-shape connect to said outer periphery. Cutting scoops 103 are thus not provided with a bottom but taper to some extent in order to make it more difficult for excavated bottom material to fall out. For discharge of the bottom material present in cutting scoops 103 there is provided in the outer periphery of wheel 102, over preferably the whole length between the legs of scoops 103, a passage 106 to which connects a collecting unit 108 protruding inward in wheel 102. The bottom material is pushed out of cutting scoops 103 by a separating tongue 109 extending substantially along the peripheral direction of wheel 102. The bottom material pushed out of scoops 103 comes to lie in collecting unit 108, which connects in turn to an inlet side 131 of discharge means 13, which in the embodiment shown in figure 3 comprises carrying walls (13a, 13b) with an entraining means 40 therebetween in the form of a series of transverse partitions 42 connected to a mechanical drive, wherein the mechanical drive comprises endless chains 41 running between two toothed wheels (not shown), wherein at least one toothed wheel is driven. The upper conveyor belt 13b deviates slightly upward at the position of the inlet opening. Through bending thereof the upper conveyor belt 13b forms together with the lower conveyor belt 13a a widened funnel or mouth at the position of the inlet opening, whereby the material is more easily received between the conveyor belts (13a, 13b).

Wheel 102 of cutting wheel 10 is rotated about axis 101 in the indicated direction 104 by means of rotation motor 110, wherein cutting scoops 103 come with their lower edge into contact with underwater bottom 2 and dislodge material therefrom. This material is transported in the above stated manner via driven containers 132 to the deck of vessel 4 and, if desired, to bin 19 of removal vessel 20, wherein entraining means 40 ensures that a substantial part of the dredged bottom material remains present in containers 132, also when the incline of the ladder increases.

Provided according to the invention is a method in which ladder 8 is lowered underwater by means of paying out cables 11 until cutting wheel 10 reaches the bottom, wherein ladder 8 will form a determined angle 6 to the horizontal direction. The cutting wheel is then set into rotation by means of rotation motor 110, wherein bottom material is dislodged and collected in cutting scoops 103. This bottom material is discharged via passage 106 to discharge means 13 which subsequently transports the dredged bottom material to the deck of vessel 4 by means of the mechanical drive (12, 133).

Vessel 4 can be anchored here in underwater bottom 2 by lowering spud posts 5, wherein cutting wheel 10 is moved over and in the bottom by alternately hauling vessel 4 from port side to starboard side using anchor cables 30 operated by winches (which cables are in turn anchored in underwater bottom 2 by anchors 31), wherein vessel 4 rotates around spud post 5 and cutting wheel 10 makes a lateral sweeping movement.

## Claims

1. Apparatus for transporting material taken up in a liquid from an inlet side to a higher outlet side, comprising a support construction running between the inlet side and the outlet side for the purpose of supporting a discharge means for material present on the inlet side, wherein the discharge means comprises two carrying walls which are movable in the direction of the outlet side by means of a mechanical drive and between which the material for discharge is received.

2. Apparatus as claimed in claim 1, wherein an entraining means for the material is situated between the carrying walls.

3. Apparatus as claimed in claim 2, wherein the entraining means comprises a series of partitions mutually connected by means of cables or chains.

4. Apparatus as claimed in claim 3, wherein the partitions run substantially transversely of the direction of movement of the carrying walls.

5. Apparatus as claimed in claim 3 or 4, wherein the shape of the partitions fits as closely as possible onto at least one of the carrying walls.

6. Apparatus as claimed in any of the claims 2-5, wherein the entraining means is mounted on the support construction for movement in the direction of the outlet side and is driven by means of a mechanical drive, and the mechanical drive of at least one of the carrying walls comprises rollers mounted on the support construction, wherein at least one roller is drivable and wherein the carrying walls and/or the entraining means are movable together with the rollers.

7. Apparatus as claimed in any of the claims 2-6, wherein the entraining means comprises an endless rope ladder.

8. Apparatus as claimed in any one of the preceding claims, wherein the carrying walls comprise two conveyor belts co-rotating over each other in opposite rotation directions.

9. Apparatus as claimed in claim 8, wherein an entraining means for the material is situated between the carrying walls and the entraining means comprises a rope ladder running between the two conveyor belts.

10. Apparatus as claimed in any of the foregoing claims, wherein the discharge means is provided with a scraper device at least on the outlet side.

11. Dredging device for dredging bottom material underwater, comprising a vessel which can be anchored in an underwater bottom and which has a ladder which can be positioned obliquely downward in the body of water from the vessel and is provided at the free outer end thereof with at least one rotating cutting tool, wherein the dredging device is provided with an apparatus as claimed in any of the foregoing claims.

12. Dredging device as claimed in claim 11, comprising two cutting tools arranged on either side of the ladder.

13. Dredging device as claimed in claim 11 or 12, wherein the rotating cutting tool comprises a cutting wheel, wherein the cutting wheel comprises a wheel which is driven rotatably about a horizontal axis and provided with a series of cutting scoops arranged distributed on the outer periphery with an inlet opening directed forward in the rotation direction, and wherein the outer periphery of the wheel comprises a passage for excavated bottom material connecting to the inlet side of the discharge means.

14. Dredging device as claimed in any one of the claims 11-13, wherein the device comprises a suction conduit connected to pump means and extending from the vessel and into the vicinity of the inlet side of the discharge means.

15. Method for dredging bottom material underwater by means of a dredging device as claimed in any of the claims 11-14, comprising the steps of:
- providing a dredging device according to any of the claims 11-14;
- lowering the support construction obliquely downward into the water so that the inlet side is situated at the position of the rotating cutting tool and the outlet side debouches at the position of the deck of the vessel;
- loosening the bottom material by rotating the cutting tool;
- discharging dredged bottom material via the passage of the cutting tool to the carrying walls of the discharge means;
- transporting the dredged bottom material by means of driving the carrying walls, wherein the entraining means ensures that a substantial part of the bottom material is entrained with the carrying walls.

16. Method as claimed in claim 15, wherein the vessel is anchored in the underwater bottom by lowering spud posts from the vessel and the cutting tool is moved over and in the bottom by hauling the vessel alternately from port side to starboard side using winches, wherein the vessel rotates around the spud post and the cutting wheel makes a lateral sweeping movement.

17. Method as claimed in claim 16, wherein the vessel is anchored in the underwater bottom by allowing anchors connected to the vessel by means of anchor ropes to engage in the bottom, and the cutting tool is moved over and in the bottom along a path defined by hauling of the vessel with the anchor ropes.

18. Method as claimed in claim 17, wherein the path is substantially linear.
